# EUROPEAN PATENT APPLICATION

(11) **EP 4 231 176 A1**
(43) Date of publication of application: **23.08.2023**
(21) Application number: 21880032.4
(22) Date of filing: 11.10.2021
(51) Int. Cl.: G06F 21/32, G07C 9/37

(54) **AUTHENTICATION SYSTEM, AUTHENTICATION METHOD, PROGRAM STORAGE MEDIUM**

(30) Priority: 16.10.2020 JP 2020174914
(71) Applicant: NEC Corporation, 108-8001 Tokyo (JP)
(72) Inventor: OGINO Yuka, Tokyo 108-8001 (JP)
(74) Representative: Betten & Resch
(86) International application number: PCT/JP2021/037515
(87) International publication number: WO 2022/080293

(57) **Abstract**

In order to enable images of a subject of authentication who is walking to be captured at an appropriate image-capture timing corresponding to the walking state of the subject of authentication, and to acquire a clear image in which blurring of the subject of authentication is suppressed, an authentication system according to the present invention detects the position of the subject of authentication, the blurring of the body of the same being suppressed by a blurring suppressing means that suppresses blurring of the body of the subject of authentication. On the basis of the detection results, the authentication system controls an image-capture operation of an image-capture means for capturing images of the subject of authentication, and determines, on the basis of biometric information acquired from a captured image of the subject of authentication captured by the image-capture means, whether or not to authenticate the subject of authentication.

## Description

### Technical Field

The present disclosure relates to a technique for biometric authentication using biometric information indicating features of an individual.

### Background Art

The biometric authentication is authentication using biometric information such as a face, a fingerprint, an iris, a vein pattern of a finger, a palm, or a back, a way of walking, or the like, which is a feature of an individual. In the biometric authentication, for example, the feature amount extracted from the biometric information of an authentication target person is compared with the feature amount of the biometric information of a registered person registered in advance, and the authentication target person is authenticated as a registered person when the feature amount of the authentication target person matches the feature amount of the registered person.

Note that PTL 1 (JP 2007-159762 A) relates to a biometric authentication device using an image in which an eye of an authentication target person is imaged, and discloses a technique for guiding the authentication target person (subject) to an optimum imaging position in order to acquire an image of an eye appropriate for authentication.

Further, PTL 2 (JPH 4-153799 A) discloses a technique of detecting a location of a person by detecting a load or a contact.

### Citation List

### Patent Literature

PTL 1: JP 2007-159762 A
PTL 2: JPH 4-153799 A

### Summary of Invention

### Technical Problem

One of biometric authentication systems is a biometric authentication system also referred to as a walk-through type. The walk-through-type biometric authentication system is an authentication system that determines whether to authenticate an authentication target person while walking without stopping the authentication target person in front of a camera, for example. In the walk-through-type biometric authentication system, for example, an image of an eye of the walking authentication target person is imaged by a fixed camera, and the captured image of the eye is used as biometric information for authentication processing. The timing at which the fixed camera captures the image of the eye of the walking authentication target person is determined in advance, for example, as when a predetermined time has elapsed since the authentication target person passed through a predetermined trigger point. The predetermined time is a time assumed to be required to reach the imaging point of the fixed camera after passing through the trigger point, and is set based on, for example, a result of investigation of walking states such as walking speeds of a large number of people.

Incidentally, there is a case where the walking state of the authentication target person is different from the assumed walking state such that the walking speed is very slow because the authentication target person is injured in the foot. In such a case, even if the fixed camera captures an image at a preset imaging timing, there may be a problem that a captured image of the eye of the authentication target person cannot be obtained because the authentication target person has not reached the imaging point of the fixed camera. In addition, since the head of a walking authentication target person swings more than an assumed walking state due to an injury in a foot or the like, even if an image of the eye can be captured, there may occur a problem that the image of the eye is blurred and is inappropriate for the authentication process.

The present disclosure has been devised in order to solve the above problems. That is, a main object of the present disclosure is to provide a technique for acquiring a clear image in which the authentication target person can be imaged at an appropriate imaging timing according to the walking state of a walking authentication target person, and blurring of the authentication target person is suppressed.

### Solution to Problem

In order to achieve the above object, an authentication system includes, as one aspect thereof:
a shake suppression means configured to suppress shaking of a body of an authentication target person;
a detection means configured to detect a position of the authentication target person;
an imaging means configured to image the authentication target person;
a control means configured to control an imaging operation of the imaging means that images the authentication target person, based on a detection result from the detection means; and
an authentication means configured to determine whether to authenticate the authentication target person based on biometric information acquired from a captured image of the authentication target person captured by the imaging means.

Further, an authentication method, as one aspect thereof,
causes a computer to execute:
detecting a position of an authentication target person whose body shaking is suppressed by a shake suppression means that suppresses the body shaking of the authentication target person;
controlling an imaging operation of an imaging means that images the authentication target person, based on a detection result; and
determining whether to authenticate the authentication target person based on biometric information acquired from a captured image of the authentication target person captured by the imaging means.

Further, a program storage medium, as one aspect thereof,
stores a computer program for causing a computer to execute:
a process of detecting a position of an authentication target person whose body shaking is suppressed by a shake suppression means that suppresses the body shaking of the authentication target person;
a process of controlling an imaging operation of an imaging means that images the authentication target person, based on a detection result; and
a process of determining whether to authenticate the authentication target person based on biometric information acquired from a captured image of the authentication target person captured by the imaging means.

### Brief Description of Drawings

[Fig. 1] Fig. 1 is a block diagram showing a general configuration of an authentication system of the present disclosure.
[Fig. 2] Fig. 2 is a flowchart illustrating an example of an operation related to authentication processing of the authentication system illustrated in Fig. 1.
[Fig. 3] Fig. 3 is a diagram illustrating an authentication system according to a first example embodiment.
[Fig. 4] Fig. 4 is a diagram illustrating a configuration of a computer device constituting the authentication system according to the first example embodiment.
[Fig. 5] Fig. 5 is a flowchart illustrating an example of an operation related to authentication processing of the authentication system of the first example embodiment.
[Fig. 6] Fig. 6 is a diagram for explaining an authentication system according to a second example embodiment.
[Fig. 7] Fig. 7 is a diagram for explaining an authentication system according to a third example embodiment.
[Fig. 8] Fig. 8 is a diagram illustrating another example embodiment of the detection device.
[Fig. 9] Fig. 9 is a diagram for explaining another example embodiment of the shake suppression device.
[Fig. 10] Fig. 10 is a view for explaining still another form example of the shake suppression device.

### Example embodiment

Hereinafter, example embodiments of the present disclosure will be described with reference to the drawings.

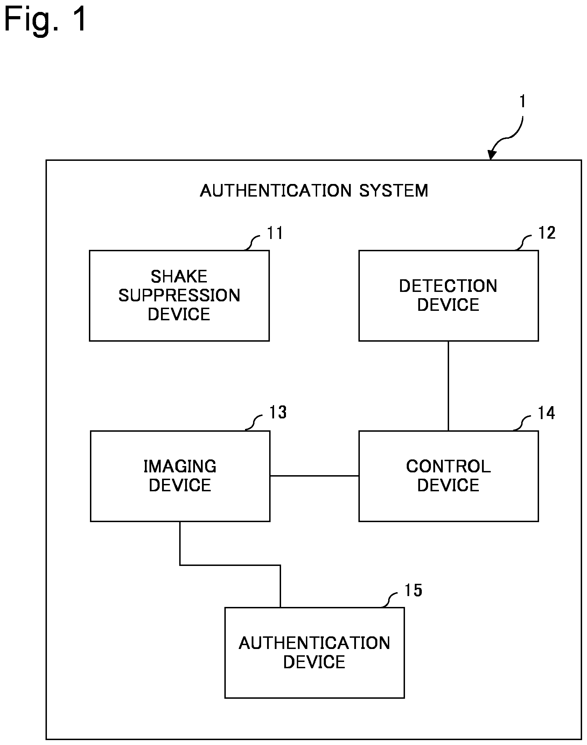

First, a general configuration of an authentication system of the present disclosure will be described. Fig. 1 is a block diagram illustrating a general configuration of an authentication system of the present disclosure. An authentication system 1 according to the present disclosure is a system including a function of determining whether to authenticate the authentication target person based on the biometric information of the authentication target person acquired by an imaging device, and a function of acquiring the biometric information of the authentication target person without stopping the authentication target person. The authentication system 1 is a so-called walk-through-type biometric authentication system. The authentication system 1 includes a shake suppression device 11, a detection device 12, an imaging device 13, a control device 14, and an authentication device 15.

The shake suppression device 11 is configured to suppress shaking of the body of the authentication target person. The detection device 12 has a detection function of detecting the position of the authentication target person. The imaging device 13 is a device that images the authentication target person. The control device 14 has a control function of controlling the imaging operation of the imaging device 13 based on the detection result from the detection device 12. The authentication device 15 has an authentication function of determining whether to authenticate the authentication target person based on the biometric information acquired from the captured image of the authentication target person captured by the imaging device 13.

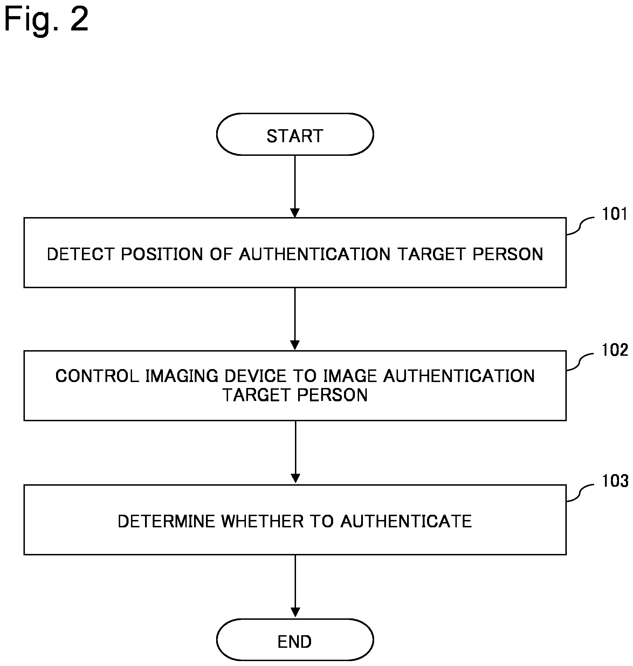

An operation example related to the authentication process in such an authentication system 1 will be described below with reference to Fig. 2. Fig. 2 is a flowchart illustrating an example of an operation related to an authentication process in the authentication system 1. In this example, the detection function of the detection device 12, the control function of the control device 14, and the authentication function of the authentication device 15 are implemented by a computer device executing a computer program.

First, when the detection device 12 detects the position of the authentication target person (step 101 in Fig. 2), the control device 14 controls the imaging device 13 to image the authentication target person based on the detection result (step 102).

Thereafter, the authentication device 15 determines whether to authenticate the authentication target person based on the biometric information acquired from the captured image of the authentication target person captured by the imaging device 13 (step 103).

In the authentication system 1 as described above, since the shaking of the body of the authentication target person is suppressed by providing the shake suppression device 11, it is possible to prevent the blurring of the captured image of the authentication target person captured by the imaging device 13. In addition, the authentication system 1 includes the control device 14 that controls the imaging operation of the imaging device 13 based on the detection result from the detection device 12. As a result, the control device 14 can control the imaging operation of the imaging device 13 that images the authentication target person according to the moving state of the authentication target person.

Therefore, the authentication system 1 can obtain an effect that the authentication target person can be imaged at an appropriate imaging timing according to the walking state of the walking authentication target person, and a clear image in which the blurring of the authentication target person is suppressed can be acquired. As a result, the authentication system 1 can improve the accuracy of the authentication result for the authentication target person, and can improve the reliability of the authentication result.

Hereinafter, an example embodiment which is a specific example of such an authentication system 1 will be described.

### <First example embodiment>

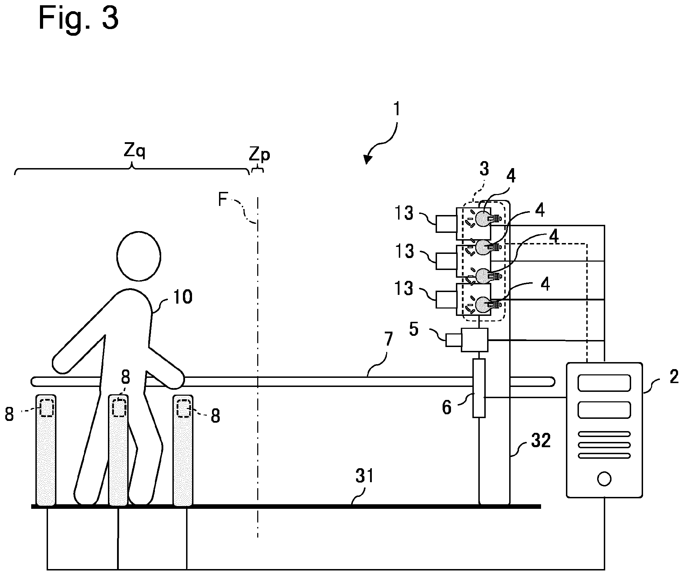

Fig. 3 is a diagram for explaining the authentication system according to the first example embodiment. In the description of the first example embodiment, the same reference numerals are given to the same name parts as the components constituting the authentication system illustrated in Fig. 1, and redundant description of the common parts will be omitted.

The authentication system 1 of the first example embodiment determines whether to permit a person 10 who is about to enter an entrance monitoring area to enter as an authentication target person in a passage connected to an entrance of a facility or the like (hereinafter, also referred to as an entrance monitoring area) where only a registered person who is permitted to enter can enter. The authentication system 1 is a biometric authentication system using the iris of the authentication target person 10 as biometric information, and includes a computer device 2, an illumination unit 3, a whole camera 5, a notification device 6, a handrail 7, a human detection sensor 8, and an imaging device 13.

The imaging device 13 is a camera that images the iris of the authentication target person, and images at least the eye area of the authentication target person 10 passing through the depth of field area of, for example, about 1 cm with a fixed focal point at a high frame rate and a high resolution. Here, the high frame rate is, for example, a frame rate higher than 30 frames per second (fps). The high resolution is, for example, a resolution higher than 350 dots per inch (dpi).

In the first example embodiment, it is assumed that there is a plurality of authentication target persons 10 having different heights, and in order to image the iris of the authentication target person 10 having any height, a plurality of imaging devices 13 are arranged in the height direction within a range in the height direction in consideration of the difference in height of the authentication target persons 10. In the example of Fig. 3, the plurality of imaging devices 13 are fixed to a support column 32, for example, in a state of being arranged in the height direction. The support column 32 is fixed to a road surface 31 of the passage connected to the entrance of the entrance monitoring area. An imaging operation of such an imaging device 13 is controlled by the computer device 2.

The illumination unit 3 includes a light source 4 that emits light (for example, infrared rays) toward the face of the authentication target person 10 so that the iris of the authentication target person 10 is clearly captured in the image captured by the imaging device 13. Also in the illumination unit 3, similarly to the imaging device 13, it is assumed that there is a plurality of authentication target persons 10 having different heights, and the plurality of light sources 4 are arranged in the height direction. The light emission and non-emission of these light sources 4 are controlled by the computer device 2.

The whole camera 5 is a camera that images a person who approaches the entrance of the entrance monitoring area. For example, camera parameters of the whole camera 5 are set such that the whole body of a person (the authentication target person 10) positioned in a predetermined area (hereinafter, also referred to as an imaging area of the whole camera 5) including the position of the fixed focal point of the imaging device 13 (for example, the position of the imaging point F in Fig. 3) is imaged.

The notification device 6 is a device that visually or audibly notifies information. For example, the notification device 6 includes a display device with a speaker, and notifies the authentication target person 10 of the result of the determination on whether the authentication target person can enter the entrance monitoring area. Operation control of the notification device 6 is executed by the computer device 2.

In the first example embodiment, the handrail 7 constitutes the shake suppression device 11. That is, the handrail 7 is provided at least in the next area along the passage toward the entrance of the entrance monitoring area, and assists walking of the person (authentication target person 10) imaged by the imaging device 13. The area where the handrail 7 is provided is, for example, an imaging area Zp and an imaging preparation area Zq as illustrated in Fig. 3. The imaging area Zp is an imaging area (hereinafter, also referred to as an imaging area of the imaging device 13) including the imaging point F of the imaging device 13. The imaging preparation area Zq is an area before the person (the authentication target person 10) who is heading for the entrance of the entrance monitoring area reaches the imaging area Zp, and is an area used by the authentication system 1 to determine the imaging start timing of the imaging device 13.

The handrail 7 assists the walking of the authentication target person 10 to suppress the shaking of the body of the authentication target person 10, thereby preventing the blurring of the authentication target person 10 in the image captured by the imaging device 13.

The human detection sensor 8 is a sensor that is provided in a passage toward an entrance of the entrance monitoring area, and detects a person passing through the passage. In the first example embodiment, as illustrated in Fig. 3, the plurality of human detection sensors 8 are arranged at intervals in at least the imaging preparation area Zq along the passage toward the entrance of the entrance monitoring area. There is a plurality of types of human detection sensors, and in this example, the type of human detection sensor adopted as the human detection sensor 8 is appropriately selected in consideration of the aspect of the passage and the like, and the type is not limited. For example, there is a type of human detection sensor that detects a person in a non-contact manner using infrared rays, ultrasonic waves, visible light, and the like.

The interval between the adjacent human detection sensors 8 is set in consideration of the performance of the human detection sensors 8 so that the authentication target person 10 walking on the passage is not detected by the plurality of human detection sensors 8, for example.

The computer device 2 has a control function of controlling the operations of the imaging device 13 and the illumination unit 3, and an authentication function of determining whether to permit the authentication target person 10 to enter the entrance monitoring area using the image captured by the imaging device 13. Note that the computer device 2 may be disposed in the vicinity of the entrance of the entrance monitoring area, or may be disposed in another place (for example, a server room of a facility), and an arrangement place is not limited.

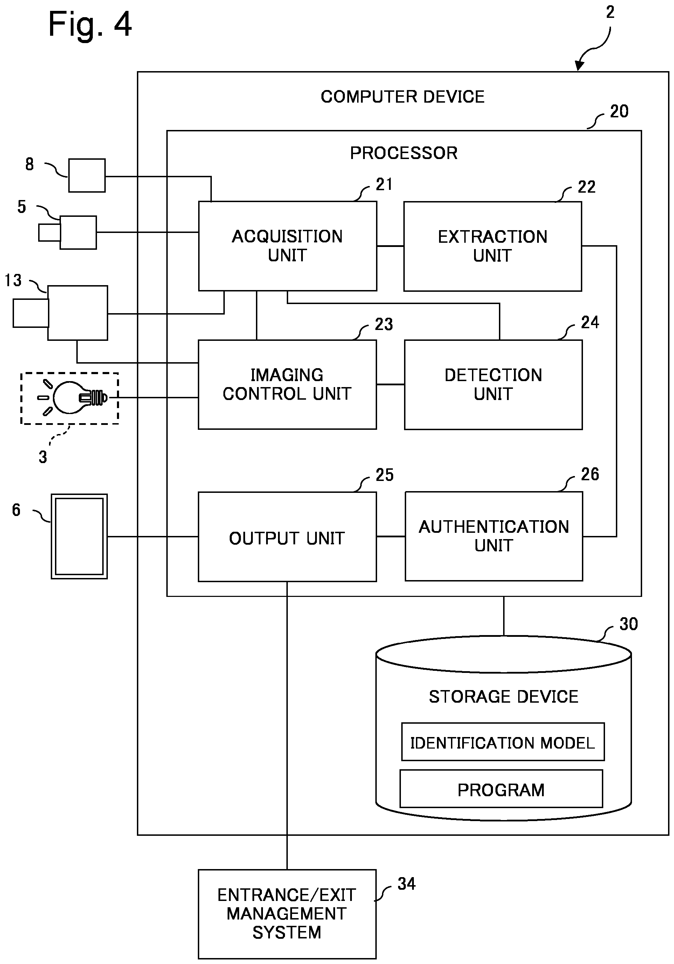

Fig. 4 is a block diagram illustrating a configuration of the computer device 2. The computer device 2 includes a processor 20 such as a central processing unit (CPU) and a storage device 30. Here, as the processor 20, one of a central processing unit (CPU), a graphics processing unit (GPU), a field-programmable gate array (FPGA), a demand-side platform (DSP), and an application specific integrated circuit (ASIC) may be used, or a plurality of processors may be used in parallel.

The storage device 30 is a storage medium that stores various pieces of data and computer programs (hereinafter, also referred to as a program). The storage device 30 includes various types such as a magnetic disk device and a semiconductor memory, and here, the storage device 30 may be configured by any type of storage device. In addition, the storage device constituting the storage device 30 is not limited to one type, and the storage device 30 may be constituted by a plurality of types of storage devices.

In the first example embodiment, an identification model is stored in the storage device 30. This identification model is a model that is generated by machine learning of biometric information (here, the iris, more specifically, the feature amount extracted from the image of the iris) acquired from the authentication target person and is used for determining whether the authentication target person is permitted to enter.

The processor 20 is an arithmetic circuit, and can cause the computer device 2 to have a function based on a program by reading the program stored in the storage device 30 and executing the program. That is, the processor 20 includes, as functional units, an acquisition unit 21, an extraction unit 22, an imaging control unit 23, a detection unit 24, an output unit 25, and an authentication unit 26.

The acquisition unit 21 acquires a captured image captured by the imaging device 13 or the whole camera 5. The acquisition unit 21 acquires the sensor output that is output from the human detection sensor 8. Although the plurality of human detection sensors 8 and the plurality of imaging devices 13 are provided in the first example embodiment, only one human detection sensor 8 and one imaging device 13 are illustrated in Fig. 4, and the other human detection sensors 8 and the other imaging devices 13 are not illustrated.

Each of the plurality of imaging devices 13 is set with an imaging device ID (IDentification) as identification information, and the image captured by the imaging device 13 acquired by the acquisition unit 21 is associated with the imaging device ID of the imaging device 13 that has captured the captured image.

A sensor identification (ID) as identification information is set to each of the plurality of human detection sensors 8. The sensor output of the human detection sensor 8 acquired by the acquisition unit 21 is associated with the sensor ID of the human detection sensor 8 that has output the sensor output. The sensor output of the human detection sensor 8 acquired by the acquisition unit 21 is associated with, for example, time information of the time when the sensor output was acquired by the acquisition unit 21.

The extraction unit 22 detects an image area of the iris, which is biometric information, from the image captured by the imaging device 13 acquired by the acquisition unit 21, and extracts a feature amount of the iris from the image area of the iris. There are various methods for extracting the feature amount, and here, a feature amount extraction method appropriately selected in consideration of the performance of the computer device 2, the image quality of the captured image, and the like is adopted, and the description of the feature amount extraction method is omitted.

The detection unit 24 detects the position of the authentication target person 10 using the sensor output of the human detection sensor 8 acquired by the acquisition unit 21. That is, information indicating the installation position of the human detection sensor 8 is stored in, for example, the storage device 30 in association with the sensor ID of the human detection sensor 8. When detecting that one of the plurality of human detection sensors 8 outputs a sensor output indicating that a person is detected, the detection unit 24 acquires the installation position of the human detection sensor 8 based on the sensor ID of the human detection sensor 8 that outputs the sensor output. Then, the detection unit 24 detects the acquired installation position of the human detection sensor 8 as the position of the authentication target person 10.

In addition, the detection unit 24 calculates the speed of the movement (walking) of the authentication target person 10 as information related to the movement of the position of the authentication target person. That is, the authentication target person 10 who is heading for the entrance of the entrance monitoring area is detected by the plurality of human detection sensors 8 arranged in the passage connected to the entrance of the entrance monitoring area in order from the side far from the entrance of the entrance monitoring area. Based on the time information associated with the sensor output of the human detection sensor 8, the detection unit 24 can calculate the movement time from when the authentication target person 10 is detected by one of the human detection sensors 8 to when the authentication target person 10 is detected by the adjacent human detection sensor 8. Furthermore, the detection unit 24 can calculate the distance between the adjacent human detection sensors 8 based on information on the installation positions of the human detection sensors 8 provided in advance. The detection unit 24 calculates the moving speed of the authentication target person 10 based on the distance and the moving time. In the case where three or more human detection sensors 8 are arranged, the detection unit 24 can calculate the plurality of moving speeds such as the moving speed based on the sensor outputs of the first and second human detection sensors 8 in the arrangement and the moving speed based on the sensor outputs of the second and third human detection sensors 8 in the arrangement. In such a case, the detection unit 24 may set one (for example, a median value) of the plurality of calculated moving speeds as the moving speed of the authentication target person 10, or may further calculate an average value of the plurality of calculated moving speeds and set the average value as the moving speed of the authentication target person 10.

In the first example embodiment, the detection unit 24 and the human detection sensor 8 constitute the detection device 12.

The imaging control unit 23 executes control related to imaging of the imaging device 13. For example, when the imaging control unit 23 detects that the authentication target person 10 has entered the imaging preparation area Zq based on the sensor output of the human detection sensor 8, the height of the eye area of the authentication target person 10 is detected from the image captured by the whole camera 5. Furthermore, information on the height at which each of the imaging devices 13 is installed or information on the height from the road surface 31 at the focal point of each of the imaging devices 13 is stored in the storage device 30 in association with the imaging device ID. The imaging control unit 23 selects the imaging device 13 suitable for imaging the eye area of the authentication target person 10 from the plurality of imaging devices 13 based on the height information related to the imaging device 13 and the height information of the eye area of the authentication target person 10. In addition, the imaging control unit 23 starts light emission of the light source 4 of the illumination unit 3.

Furthermore, the imaging control unit 23 determines an imaging start timing to start imaging of the imaging device 13 selected to be used for imaging, using detection information (that is, the information on the position and the moving speed of the authentication target person 10) by the detection unit 24. For example, the imaging control unit 23 acquires information on the distance between the imaging point F and the installation position (trigger point) of the human detection sensor 8 closest to the imaging point F among the arranged human detection sensors 8, and the moving speed of the authentication target person 10 calculated by the detection unit 24. Then, using the acquired information, the imaging control unit 23 calculates the time required for the authentication target person 10 to reach the imaging point F from the installation position of the human detection sensor 8 closest to the imaging point F. In other words, the imaging control unit 23 estimates the time to reach the imaging point F. Furthermore, the imaging control unit 23 determines the imaging start timing of the imaging device 13 based on the time obtained by subtracting a predetermined time (for example, 1 second) from the estimated required time and the time when the authentication target person 10 is detected by the human detection sensor 8 closest to the imaging point F. Furthermore, the imaging control unit 23 controls the imaging operation of the imaging device 13 so as to start imaging at the determined imaging start timing and end imaging when a predetermined imaging time (for example, 1 second) has elapsed from the start of imaging.

In the first example embodiment, the imaging control unit 23 corresponds to the control device 14.

As described above, the image captured by the imaging device 13 under the control of the imaging control unit 23 is acquired by the acquisition unit 21, and the feature amount of the iris, which is the biometric information of the authentication target person 10 captured in the captured image, is extracted by the extraction unit 22.

The authentication unit 26 determines whether the authentication target person 10 is permitted to enter the entrance monitoring area (whether the authentication target person 10 can enter) based on the feature amount of the iris extracted from the biometric information of the authentication target person using the identification model of the storage device 30. In other words, the authentication unit 26 determines whether to authenticate the authentication target person 10. In the first example embodiment, such an authentication unit 26 corresponds to the authentication device 15.

The output unit 25 outputs the determination result from the authentication unit 26 to a predetermined output destination. For example, the output destination is the notification device 6 or an entrance/exit management system 34 connected to the authentication system 1. The notification device 6 that has received the information on the determination result notifies the authentication target person 10 of the determination result. In addition, the entrance/exit management system 34 is a system that manages entrance to the entrance monitoring area and exit from the entrance monitoring area, and controls, for example, an opening/closing operation of a passage blocking bar installed at an entrance of the entrance monitoring area, and an operation of locking and unlocking a door. When the information of "authenticate (permit entrance)" is received from the output unit 25 as the determination result from the authentication unit 26, the entrance/exit management system 34 causes an apparatus operation for permitting entrance, such as opening a passage blocking bar or unlocking a door, to be executed.

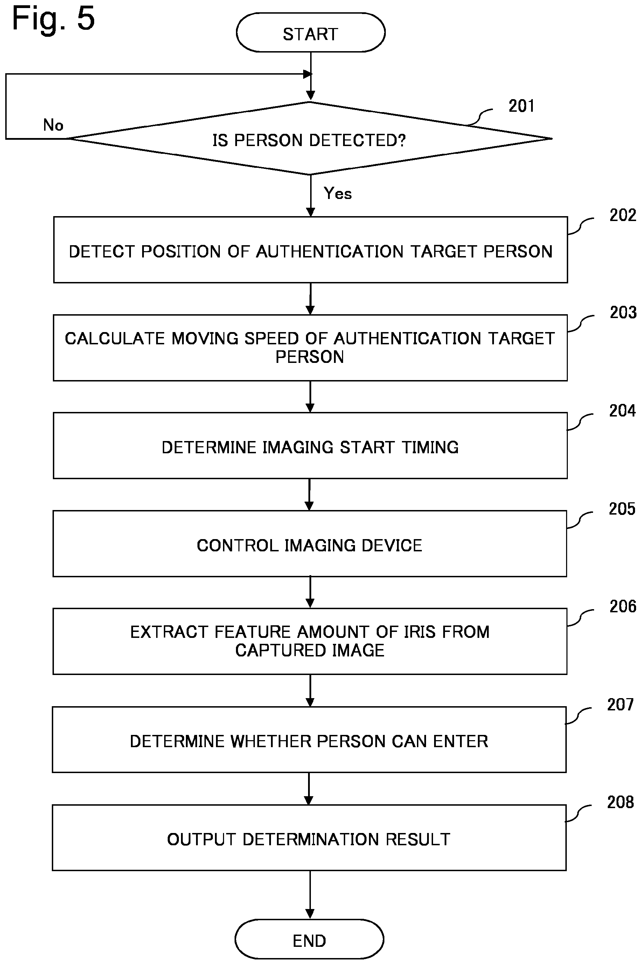

Hereinafter, an example of an operation related to the authentication process in the computer device 2 will be described with reference to Fig. 5. Fig. 5 is a flowchart illustrating an example of an operation related to the authentication process in the computer device 2.

For example, first, the detection unit 24 determines whether the human detection sensor 8 has detected a person (that is, the authentication target person 10) in the imaging preparation area Zq based on the sensor output of the human detection sensor 8 (step 201 in Fig. 5). When it is determined that a person is not detected by this determination, the detection unit 24 repeats the determination operation in step 201. On the other hand, when it is determined that a person has been detected, the detection unit 24 detects the position of the authentication target person 10 based on the sensor output of the human detection sensor 8 (step 202). Furthermore, the detection unit 24 calculates the moving speed of the authentication target person 10 using the time information associated with the sensor outputs of the plurality of human detection sensors 8 acquired by the acquisition unit 21 and the distance between the installation positions of the human detection sensors 8 (step 203).

Thereafter, the imaging control unit 23 determines the imaging start timing of the imaging device 13 selected as the imaging device that executes imaging based on the moving speed of the authentication target person 10 and the information of the position of the imaging point F (step 204). Then, the imaging control unit 23 controls the imaging operation of the imaging device 13 so as to start imaging at the determined imaging start timing and end imaging when a predetermined imaging time has elapsed from the start of imaging (step 205). As a result, the eye area of the authentication target person 10 is imaged by the imaging device 13.

The acquisition unit 21 acquires the captured image including the eye area of the authentication target person 10 captured by the imaging device 13 in this manner, and the extraction unit 22 extracts the feature amount of the iris of the authentication target person 10 from the image portion of the eye area in the captured image (step 206). Further, the authentication unit 26 determines whether the authentication target person 10 can enter the entrance monitoring area based on the extracted feature amount using the identification model (step 207). Then, the output unit 25 outputs the determination result to a predetermined output destination (step 208).

The authentication system 1 of the first example embodiment is configured as described above. In the authentication system 1, the handrail 7 along the passage is provided as the shake suppression device 11 in the imaging area Zp and the imaging preparation area Zq related to the imaging of the imaging device 13 in the passage toward the entrance of the entrance monitoring area. As a result, the authentication target person 10 walking toward the entrance of the entrance monitoring area uses the handrail 7, so that the walking of the authentication target person 10 is stabilized, and the authentication system 1 can acquire a clear image in which the blurring of the authentication target person is suppressed.

In addition, the authentication system 1 calculates the moving speed representing the walking state of the authentication target person 10 using the sensor output of the human detection sensor 8 constituting the detection device 12, and determines the imaging start timing of the authentication target person 10 by the imaging device 13 based on the moving speed. That is, since the authentication system 1 determines the imaging start timing of the authentication target person 10 by the imaging device 13 according to the walking state of the authentication target person 10, the authentication system 1 can image the authentication target person 10 at an appropriate timing according to the walking state of the authentication target person 10.

As described above, the authentication system 1 of the first example embodiment can image the authentication target person 10 at an appropriate timing according to the walking state of the authentication target person 10, and can acquire a clear image in which the blurring of the authentication target person 10 is suppressed. Therefore, the authentication system 1 can improve the accuracy of the authentication result for the authentication target person, and can improve the reliability of the authentication result.

In addition, when determining the imaging start timing of the authentication target person 10 by the imaging device 13, the authentication system 1 according to the first example embodiment calculates the moving speed representing the walking state of the authentication target person 10, and calculates and uses information on the time estimated to reach the imaging point F based on the moving speed. As a result, the authentication system 1 (imaging control unit 23) can increase the calculation accuracy (estimation accuracy) as compared with the case of calculating the time estimated to reach the imaging point F using the predetermined fixed time. Therefore, the imaging control unit 23 can accurately determine an appropriate timing to start imaging before the authentication target person 10 reaches the imaging point F.

Furthermore, in the first example embodiment, the handrail 7 is provided as the shake suppression device 11. The handrail 7 can effectively suppress the body shaking of the authentication target person 10 with a simple configuration. The handrail 7 can smoothly guide the authentication target person 10 to the imaging point F.

Furthermore, the authentication system 1 executes the process of authenticating the authentication target person 10 using the iris which is the biometric information. Since the iris has a clear individual difference and is said to be unchanged for a lifetime, and is covered by the cornea and is hardly damaged, by performing the authentication process using the iris, the authentication system 1 can increase the reliability of the determination of whether to authenticate the authentication target person 10. In addition, as described above, since the imaging of the eye area of the authentication target person 10 by the imaging device 13 is controlled, it is possible to acquire a clear image of the eye area (iris) of the walking authentication target person 10, the authentication system 1 is a system effective for the iris authentication.

### <Second example embodiment>

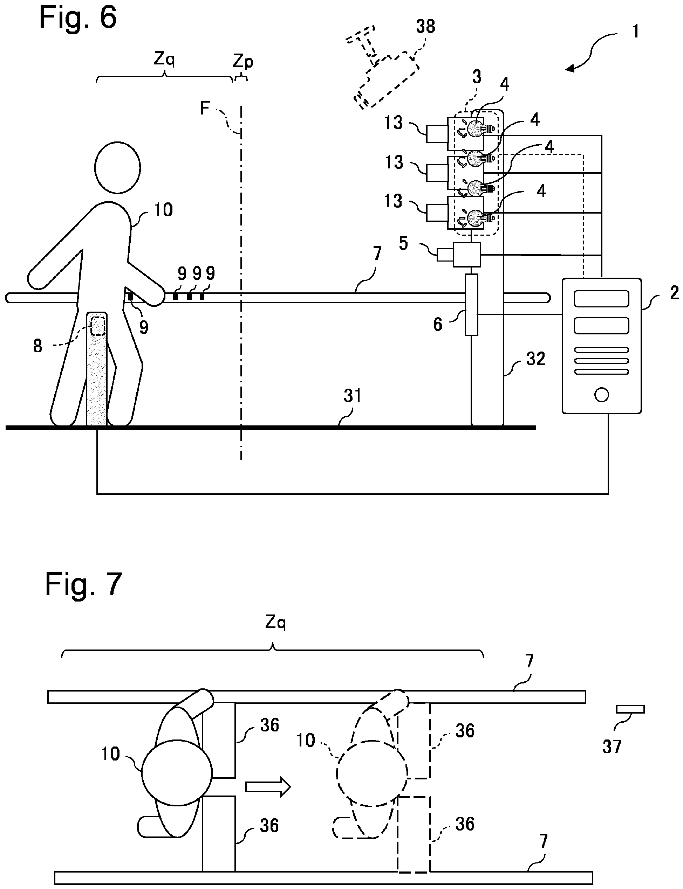

Fig. 6 is a diagram illustrating a configuration of an authentication system according to a second example embodiment. Note that, in the description of the second example embodiment, the same reference numerals are given to the same name parts as the components constituting the authentication system 1 illustrated in Fig. 1 or the components constituting the authentication system 1 of the first example embodiment, and redundant description of the common parts is omitted.

In the second example embodiment, the plurality of pressure-sensitive sensors 9 are provided on the handrail 7, and one human detection sensor 8 is provided in the imaging preparation area Zq instead of the plurality of human detection sensors 8.

The pressure-sensitive sensor 9 is a sensor whose sensor value output from the sensor 9 changes depending on the contact pressure. In the second example embodiment, the plurality of pressure-sensitive sensors 9 are arranged at intervals along a passage toward the entrance of the entrance monitoring area (that is, along the moving direction of the authentication target person 10) in a portion (grip portion) of the handrail 7 gripped by a person. The plurality of pressure-sensitive sensors 9 may be provided at least in the imaging preparation area Zq of the handrail 7, but may be provided over the entire length of the handrail 7 in the direction along the passage, for example.

Since the pressure-sensitive sensor 9 is provided on the grip portion of the handrail 7, when the authentication target person 10 grips the grip portion of the handrail 7 on which the pressure-sensitive sensor 9 is provided, the sensor output value of the pressure-sensitive sensor 9 of the gripped portion changes. It can also be said that the installation position of the pressure-sensitive sensor 9 in which the sensor output value has changed in this manner is the position of the authentication target person 10. In the second example embodiment, the interval between the plurality of pressure-sensitive sensors 9 is set in consideration of the size of a person's general palm and the like so that the plurality of pressure-sensitive sensors 9 are not simultaneously held by a hand of the authentication target person 10 when the hand holds the handrail 7.

The sensor output value of the pressure-sensitive sensor 9 is acquired by the acquisition unit 21 of the computer device 2. The acquired sensor output value of the pressure-sensitive sensor 9 is associated with a pressure-sensitive identification (ID) unique to the pressure-sensitive sensor 9 that has output the sensor output value and time information indicating the acquired time. In the storage device 30, information indicating the installation position of each of the plurality of pressure-sensitive sensors 9 is stored in association with the pressure-sensitive ID of the corresponding pressure-sensitive sensor 9.

When detecting the pressure-sensitive sensor 9 whose sensor output value has changed from a predetermined reference value, the detection unit 24 of the computer device 2 reads information on the installation position of the pressure-sensitive sensor 9 as the position of the authentication target person 10 from the storage device 30 based on the pressure-sensitive ID of the pressure-sensitive sensor 9. In addition, the detection unit 24 calculates the moving speed of the authentication target person 10 by a method similar to the method for calculating the moving speed of the authentication target person 10 using the plurality of human detection sensors 8 described in the first example embodiment. That is, the detection unit 24 can calculate the movement time from when one of the pressure-sensitive sensors 9 detects the authentication target person 10 to when the adjacent pressure-sensitive sensor 9 detects the authentication target person 10 by using the time information associated with the sensor output value of the pressure-sensitive sensor 9. In addition, the detection unit 24 can calculate the distance between the adjacent pressure-sensitive sensors 9 based on information on the installation positions of the pressure-sensitive sensors 9 provided in advance. The detection unit 24 calculates the moving speed of the authentication target person 10 based on the distance and the moving time. That is, in the second example embodiment, the detection unit 24 and the pressure-sensitive sensor 9 constitute the detection device 12.

In the second example embodiment, when the imaging start timing of the imaging device 13 is determined, the imaging control unit 23 uses the detection of the authentication target person 10 by the human detection sensor 8 and the distance from the installation position of the human detection sensor 8 to the imaging point F as in the first example embodiment. However, the imaging control unit 23 uses the moving speed of the authentication target person 10 calculated by the detection unit 24 using the plurality of pressure-sensitive sensors 9 as the moving speed of the authentication target person 10. That is, the imaging control unit 23 calculates the estimated time required to reach the imaging point F from the installation position of the human detection sensor 8 based on the distance from the installation position of the human detection sensor 8 to the imaging point F and the moving speed of the authentication target person 10 calculated by the detection unit 24. Similarly to the first example embodiment, the imaging control unit 23 determines the imaging start timing of the imaging device 13 based on the time obtained by subtracting a predetermined time from the estimated required time and the time when the authentication target person 10 is detected by the human detection sensor 8. The imaging control unit 23 controls the imaging operation of the imaging device 13 by using the imaging start timing determined in this manner.

The other configurations of the authentication system 1 of the second example embodiment are similar to those of the authentication system 1 of the first example embodiment, and the description thereof will be omitted.

Since the authentication system 1 of the second example embodiment is provided with the handrail 7 as the shake suppression device 11 similarly to the first example embodiment, it is possible to obtain an effect of stabilizing the walking of the authentication target person 10 and acquiring a clear image in which the blurring of the authentication target person 10 is suppressed.

In addition, the authentication system 1 of the second example embodiment includes the plurality of pressure-sensitive sensors 9, calculates the moving speed of the authentication target person 10 using the plurality of pressure-sensitive sensors 9, and determines the imaging start timing using the moving speed, thereby controlling the imaging device 13 similarly to the first example embodiment. That is, also in the authentication system 1 of the second example embodiment, the authentication target person 10 can be imaged at an appropriate timing according to the walking state of the authentication target person 10.

Therefore, the authentication system 1 of the second example embodiment can also image the authentication target person 10 at an appropriate timing according to the walking state of the authentication target person 10, and acquire a clear image in which the blurring of the authentication target person 10 is suppressed, so that the accuracy of the authentication result can be improved.

Furthermore, in the configuration in which the plurality of pressure-sensitive sensors 9 are provided on the handrail 7 and the position of the authentication target person 10 is detected based on the sensor output of the pressure-sensitive sensors 9, the position of the authentication target person 10 can be detected without causing the authentication target person 10 to be aware that the position is detected.

By the way, it is conceivable that the authentication target person 10 does not grip the handrail 7 for the reason that the hand of the authentication target person 10 is occupied with baggage or the assistance of the handrail 7 is unnecessary because the authentication target person 10 walks stably. In such a case, the moving speed of the authentication target person 10 cannot be calculated using the pressure-sensitive sensor 9. As a result, there is a concern about occurrence of a situation in which the imaging start timing of the imaging device 13 cannot be determined and the imaging device 13 cannot image the iris of the authentication target person 10. In order to avoid such a situation, for example, the whole camera 5 may be configured by a stereo camera. That is, the stereo camera is a camera that can output a captured image including information on the distance in the depth direction with respect to the camera. Since the whole camera 5 is a stereo camera, for example, the detection unit 24 can calculate a moving distance of a person (the authentication target person 10) moving toward the entrance of the entrance management area in the imaging preparation area Zq, for example, from a plurality of images (frame images) captured by the whole camera 5. Furthermore, the detection unit 24 can calculate the movement time required for the movement from the frame rate. As a result, the detection unit 24 can calculate the moving speed of the authentication target person 10 moving in the imaging preparation area Zq toward the entrance of the entrance management area by using the whole camera 5. The detection unit 24 may include such a function of calculating the moving speed of the authentication target person 10 using the whole camera 5.

In a case where the detection unit 24 has such a function of calculating the moving speed of the authentication target person 10 using the whole camera 5, for example, the detection unit 24 also has a function of detecting that the authentication target person 10 is present in the imaging preparation area Zq from the image captured by the whole camera 5. Further, when the authentication target person 10 is not detected by the pressure-sensitive sensor 9 although the presence of the authentication target person 10 is detected in the imaging preparation area Zq from the image captured by the whole camera 5, the detection unit 24 calculates the moving speed of the authentication target person 10 using the whole camera 5 instead of the pressure-sensitive sensor 9.

Alternatively, the detection unit 24 may not have a function of detecting the presence of the authentication target person 10 in the imaging preparation area Zq from the image captured by the whole camera 5, and may calculate the moving speed of the authentication target person 10 using the whole camera 5 regardless of whether the pressure-sensitive sensor 9 detects the authentication target person 10. In this case, the detection unit 24 may calculate both the moving speed of the authentication target person 10 using the pressure-sensitive sensor 9 and the moving speed of the authentication target person 10 using the whole camera 5. In this case, for example, the detection unit 24 determines an average value of the moving speed of the authentication target person 10 using the pressure-sensitive sensor 9 and the moving speed of the authentication target person 10 using the whole camera 5 as the moving speed of the authentication target person 10. Alternatively, the detection unit 24 may prioritize the pressure-sensitive sensor 9 over the whole camera 5 and determine the moving speed of the authentication target person 10 using the pressure-sensitive sensor 9 as the moving speed of the authentication target person 10.

Although the second example embodiment describes an example in which the pressure-sensitive sensor 9 is provided on the handrail 7, the pressure-sensitive sensor 9 may be provided, for example, on the road surface 31 of the imaging preparation area Zq in the passage connected to the entrance of the entrance monitoring area. Also in this case, similarly to the above, using the sensor output of the pressure-sensitive sensor 9 provided on the road surface 31, the detection unit 24 can detect the position of the authentication target person 10, and can detect the moving speed of the authentication target person 10.

### <Third example embodiment>

In the third example embodiment, an example of detecting the position of the authentication target person by a method different from the first and second example embodiments and calculating the moving speed of the authentication target person, that is, another specific example of the detection device 12 in Fig. 1 will be described. In the description of the third example embodiment, the same reference numerals are given to the same name parts as the components constituting the authentication system 1 illustrated in Fig. 1 or the components constituting the authentication system 1 of the first and second example embodiments, and redundant description of the common parts is omitted.

Fig. 7 is a plan view of a passage connected to an entrance of an entrance monitoring area as viewed from above. In the third example embodiment, a passage blocking bar 36 is provided on a passage connected to the entrance of the entrance monitoring area so as to be slidable from the imaging preparation area Zq to the entrance of the entrance monitoring area. The passage blocking bar 36 is configured to slide in the direction toward the entrance of the entrance monitoring area by receiving a pressing force in the direction toward the entrance of the entrance monitoring area. In addition, the passage blocking bar 36 is configured to obstruct passage through the passage when it is closed and to release the obstruction of passage through the passage (blocking of the passage) when it is open. For example, the basic state of the passage blocking bar 36 is the closed state, and the opening operation from the closed state to the open state is controlled by the entrance/exit management system 34. In the third example embodiment, a sensor 37 that detects the position of the passage blocking bar 36 is provided. For example, the sensor 37 is a sensor that is provided in the vicinity of the entrance of the entrance monitoring area and outputs a sensor output corresponding to the distance to the passage blocking bar 36 as information on the position of the passage blocking bar 36.

In the third example embodiment, the authentication target person 10 moves together with the passage blocking bar 36 while pushing the passage blocking bar 36 from the imaging preparation area Zq to the entrance of the entrance monitoring area. Therefore, the position of the passage blocking bar 36 can also be said to be the position of the authentication target person 10, and the moving distance and the moving speed of the passage blocking bar 36 can also be said to be the moving distance and the moving speed of the authentication target person 10. The acquisition unit 21 of the computer device 2 acquires the sensor output of the sensor 37. The acquired sensor output of the sensor 37 is associated with time information indicating the acquired time. The detection unit 24 can calculate the moving distance of the passage blocking bar 36 using the sensor output of the sensor 37, and can calculate the moving speed of the passage blocking bar 36 using the time information associated with the sensor output and the calculated moving distance. That is, the detection unit 24 can calculate the moving distance and the moving speed of the authentication target person 10 using the sensor output of the sensor 37 and the time information associated with the sensor output. In the third example embodiment, the detection unit 24, the passage blocking bar 36, and the sensor 37 constitute the detection device 12.

In the third example embodiment, when the imaging start timing of the imaging device 13 is determined, the imaging control unit 23 uses the detection of the authentication target person 10 by the human detection sensor 8 and the distance from the installation position of the human detection sensor 8 to the imaging point F as in the first example embodiment. In addition, unlike the first example embodiment, the imaging control unit 23 uses the moving speed of the authentication target person 10 calculated by the detection unit 24 using the movement detection of the passage blocking bar 36 as the moving speed of the authentication target person 10. That is, the imaging control unit 23 calculates the estimated time required to reach the imaging point F from the installation position of the human detection sensor 8 based on the distance from the installation position of the human detection sensor 8 to the imaging point F and the moving speed of the authentication target person 10 calculated by the detection unit 24. Similarly to the first example embodiment, the imaging control unit 23 determines the imaging start timing of the imaging device 13 based on the time obtained by subtracting a predetermined time from the estimated required time and the time when the authentication target person 10 is detected by the human detection sensor 8. The imaging control unit 23 controls the imaging operation of the imaging device 13 by using the imaging start timing determined in this manner.

The extraction unit 22 extracts the feature amount of the iris of the authentication target person 10 from the image of the iris of the authentication target person 10 captured by the imaging device 13 based on the control operation of the imaging control unit 23, and the authentication unit 26 determines whether the authentication target person 10 can enter the entrance monitoring area using the identification model based on the feature amount. As a result, in a case where it is determined that entrance is permitted, the determination result is output to the entrance/exit management system 34 by the output unit 25. In this case, for example, the entrance/exit management system 34 performs control for opening the passage blocking bar 36 in a state where the passage blocking bar 36 has reached the entrance of the entrance monitoring area. Thus, the authentication target person 10 can enter the entrance monitoring area without being obstructed by the passage blocking bar 36.

The other configurations of the authentication system 1 of the third example embodiment are similar to those of the authentication system 1 of the first example embodiment, and the description thereof will be omitted.

Similarly to the first example embodiment, since the authentication system 1 of the third example embodiment is provided with the handrail 7 as the shake suppression device 11, it is possible to obtain an effect of stabilizing the walking of the authentication target person 10 and acquiring a clear image in which the blurring of the authentication target person 10 is suppressed.

In addition, the authentication system 1 of the third example embodiment calculates the moving speed of the authentication target person 10 using the information about the movement of the passage blocking bar 36 that slides, and determines the imaging start timing using the moving speed, thereby controlling the imaging device 13 in the same manner as in the first example embodiment. That is, also in the authentication system 1 of the third example embodiment, the authentication target person 10 can be imaged at an appropriate timing according to the walking state of the authentication target person 10.

Therefore, the authentication system 1 of the third example embodiment can also image the authentication target person 10 at an appropriate timing according to the walking state of the authentication target person 10, and acquire a clear image in which the blurring of the authentication target person 10 is suppressed, so that the accuracy of the authentication result can be improved.

### <Fourth example embodiment>

In the fourth example embodiment, an example in which the position of the authentication target person is detected by a method different from the first to third example embodiments and the moving speed of the authentication target person is calculated, that is, another specific example of the detection device 12 in Fig. 1 will be described. Note that, in the description of the fourth example embodiment, the same reference numerals are given to the same name parts as the components constituting the authentication system 1 illustrated in Fig. 1 or the components constituting the authentication system 1 of the first to third example embodiments, and redundant description of the common parts is omitted.

In the fourth example embodiment, a plurality of marks is arranged at intervals in a direction toward the entrance of the entrance monitoring area on at least one of the surface of the handrail 7 and the road surface 31 in the imaging preparation area Zq in the passage connected to the entrance of the entrance monitoring area. Furthermore, a camera 38 as indicated by a dotted line in Fig. 6 that images the plurality of marks is provided. The detection unit 24 can detect the position of the authentication target person 10 based on the position of the mark hidden by the hand or body of the authentication target person 10 in the image captured by the camera 38.

That is, mark position information in which positions of a plurality of marks in a captured image captured by the camera 38 are associated with information indicating the positions of the marks in the real space is stored in, for example, the storage device 30. In addition, the storage device 30 stores a detection model for detecting a body of the authentication target person 10 generated by machine learning of an image of a hand or a foot of the authentication target person 10 hiding a mark in an image captured by the camera 38.

The detection unit 24 detects the positions of the hand and the foot of the authentication target person 10 from the image captured by the camera 38 using the detection model, and determines the presence or absence of a mark overlapping with the detected hand and foot. When the detection unit 24 determines that there is a mark overlapping with the hand or the foot of the authentication target person 10, the position of the mark in the real space is detected as the position of the authentication target person 10 based on the mark position information of the storage device 30. The detection unit 24 calculates the moving speed of the authentication target person 10 based on the position of the authentication target person 10 detected in this manner, a change (moving distance) in the position of the authentication target person 10 in a plurality of time-series images (frame images) captured by the camera 38, and a time (moving time) related to the change. In the fourth example embodiment, the plurality of marks, the camera 38, and the detection unit 24 constitute the detection device 12 in Fig. 1.

Using the moving speed of the authentication target person 10 calculated in this manner, the imaging control unit 23 determines the imaging start timing of the imaging device 13, and further controls the imaging operation of the imaging device 13.

The configuration of the authentication system 1 of the fourth example embodiment other than the above is similar to that of the authentication system 1 of the first and second example embodiments, and the description thereof will be omitted.

Similarly to the first to third example embodiments, since the authentication system 1 of the fourth example embodiment is provided with the handrail 7 as the shake suppression device 11, it is possible to obtain an effect of stabilizing the walking of the authentication target person 10 and acquiring a clear image in which the blurring of the authentication target person 10 is suppressed.

In the authentication system 1 of the fourth example embodiment, the detection unit 24 determines the imaging start timing of the imaging device 13 using the plurality of marks in the imaging preparation area Zq and the image captured by the camera 38 that images the marks, thereby controlling the imaging device 13 as in the first to third example embodiments. That is, also in the authentication system 1 of the fourth example embodiment, the authentication target person 10 can be imaged at an appropriate timing according to the walking state of the authentication target person 10.

Therefore, the authentication system 1 of the fourth example embodiment can also image the authentication target person 10 at an appropriate timing according to the walking state of the authentication target person 10, and acquire a clear image in which the blurring of the authentication target person 10 is suppressed, so that the accuracy of the authentication result can be improved.

Note that, in the first to fourth example embodiments, specific examples of various configurations of the detection device 12 that detects the position of the authentication target person 10 have been described, but the configuration of the detection device 12 is not limited to the above specific examples. For example, a plurality of reception sensors that receives a beacon signal transmitted from a mobile terminal such as a smartphone possessed by the authentication target person 10 may be arranged at intervals in the imaging preparation area Zq along a passage toward the entrance of the entrance monitoring area. By receiving the information indicating the installation position of the reception sensor that has received the beacon signal via the acquisition unit 21, the detection unit 24 can detect the position of the authentication target person 10 based on the information and can calculate the moving speed of the authentication target person 10 in the same manner as described above. That is, in this case, the plurality of reception sensors and the detection unit 24 constitute the detection device 12.

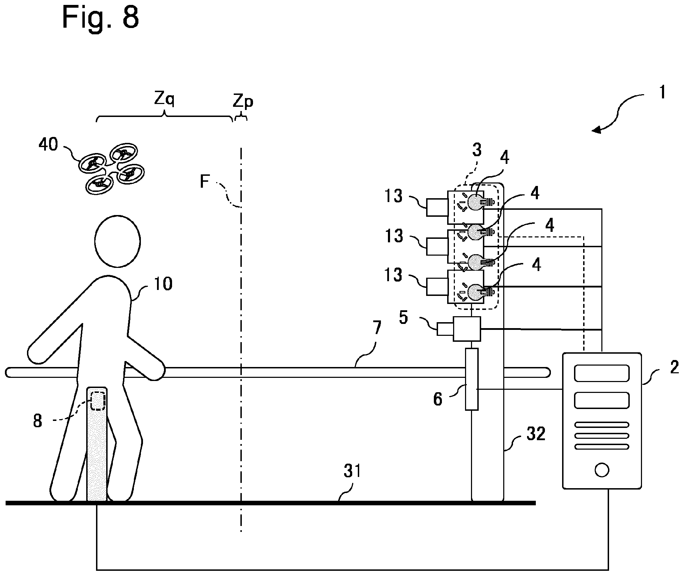

In addition, in the imaging preparation area Zq, an unmanned aerial vehicle 40 also called a drone as illustrated in Fig. 8 is caused to fly. The unmanned aerial vehicle 40 has, for example, a function of detecting a person (authentication target person 10) in the imaging preparation area Zq. As a method of detecting a person, there are various methods such as a method of using an infrared sensor and a method of mounting a camera and detecting a person from an image captured by the camera, and the method is appropriately selected in consideration of performance and the like of a computer mounted on the unmanned aerial vehicle 40.

Further, the unmanned aerial vehicle 40 has a function of moving following the movement of the person (the authentication target person 10) detected in the imaging preparation area Zq. The detection unit 24 detects the position of the unmanned aerial vehicle 40 as the position of the authentication target person 10, and calculates the moving speed of the unmanned aerial vehicle 40 as the moving speed of the authentication target person 10. Detection of the position of the unmanned aerial vehicle 40 and calculation of the moving speed of the unmanned aerial vehicle 40 can be performed, for example, by applying the above-described method of detecting the position of the authentication target person 10 and the method of calculating the moving speed.

In such a case, the unmanned aerial vehicle 40 and the detection unit 24 constitute the detection device 12.

Even in a case where the position of the authentication target person 10 is detected and the moving speed is calculated using the beacon signal of the mobile terminal or the unmanned aerial vehicle as described above, the authentication system 1 can obtain the same effects as those of the first to fourth example embodiments.

### <Fifth example embodiment>

In the fifth example embodiment, an example of suppressing the body shaking of the authentication target person by a method different from the first to fourth example embodiments, that is, another specific example of the shake suppression device 11 in Fig. 1 will be described. In the description of the third example embodiment, the same reference numerals are given to the same name parts as the components constituting the authentication system 1 illustrated in Fig. 1 or the components constituting the authentication system 1 of the first and second example embodiments, and redundant description of the common parts is omitted.

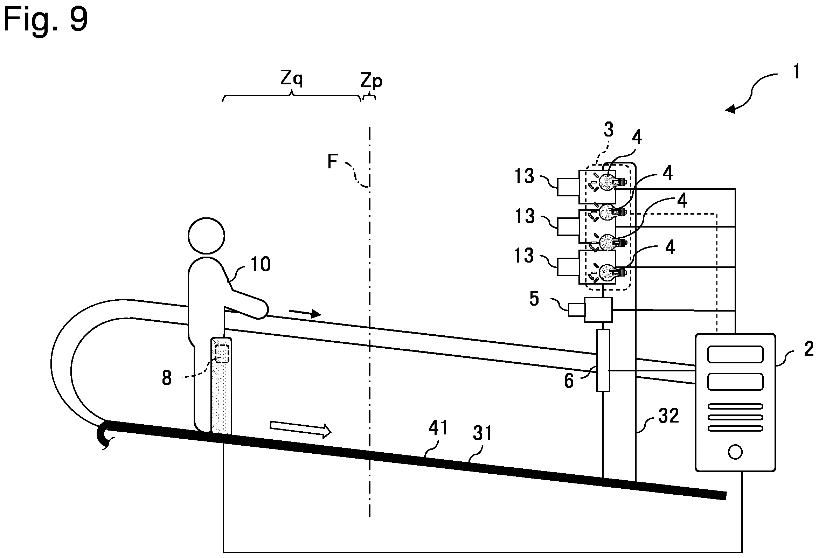

In the fifth example embodiment, at least a passage portion of the imaging preparation area Zq and the imaging area Zp in the passage connected to the entrance of the entrance monitoring area is provided with a transportation device for human, which is also referred to as a moving sidewalk 41 as illustrated in Fig. 9, as the shake suppression device 11. There is a plurality of types of configurations of the moving sidewalk 41, and any type of moving sidewalk may be provided here, and the description thereof will be omitted. In addition, although a handrail that moves with the movement of the road surface 31 of the moving sidewalk 41 is provided, the handrail 7 fixed to a wall or the like is omitted.

As described above, in a case where the moving sidewalk 41 in the passage portion between the imaging preparation area Zq and the imaging area Zp is provided, the authentication target person 10 can move without walking in the passage portion. Therefore, the body shaking of the authentication target person 10 caused by walking is suppressed.

In addition, since the body shaking of the authentication target person 10 can be suppressed in this manner, the image area in which the eye area of the authentication target person 10 is assumed to be imaged is narrowed in the image captured by the imaging device 13. That is, it is possible to narrow a region of interest (ROI) that is an area processed by the extraction unit 22, the detection unit 24, and the like in the captured image. As a result, the authentication system 1 can achieve an effect of reducing the load of processing in the computer device 2.

Further, in the fifth example embodiment, the computer device 2 has a function of connecting to a drive system that controls the operation of the moving sidewalk 41 and acquiring information on the moving speed of the road surface 31 of the moving sidewalk 41. In this case, since the authentication target person 10 and the road surface 31 of the moving sidewalk 41 move in the same manner, the detection unit 24 of the computer device 2 can detect the moving speed of the authentication target person 10 based on the information on the moving speed of the road surface 31 of the moving sidewalk 41 acquired from the drive system.

Then, using the detected moving speed of the authentication target person 10, the imaging control unit 23 determines the imaging start timing of the imaging device 13, and further controls the imaging operation of the imaging device 13, as in the first to fourth example embodiments. That is, the imaging control unit 23 calculates the time assumed to be required from the installation position of the human detection sensor 8 to the imaging point F based on the distance from the installation position of the human detection sensor 8 to the imaging point F and the moving speed of the authentication target person 10 calculated by the detection unit 24. Similarly to the first to fourth example embodiments, the imaging control unit 23 determines the imaging start timing of the imaging device 13 based on the time obtained by subtracting a predetermined time from the calculated required time and the time when the authentication target person 10 is detected by the human detection sensor 8. The imaging control unit 23 controls the imaging operation of the imaging device 13 by using the imaging start timing determined in this manner.

The other configurations of the authentication system 1 of the fifth example embodiment are similar to those of the authentication system 1 of the first to fourth example embodiments, and the description thereof will be omitted.

In the fifth example embodiment, since the moving sidewalk 41 is provided as the shake suppression device 11, it is possible to obtain an effect of suppressing the body shaking of the authentication target person 10 caused by walking, and acquiring a clear image in which the blurring of the authentication target person 10 is suppressed.

In addition, the authentication system 1 of the fifth example embodiment is connected to a drive system that controls the operation of the moving sidewalk 41, and acquires information on the moving speed of the road surface 31 of the moving sidewalk 41. As a result, since the detection unit 24 can detect the moving speed of the authentication target person 10 based on the information regarding the moving speed of the road surface 31 of the moving sidewalk 41 acquired from the drive system, it is possible to reduce the load related to the calculation processing of the moving speed of the authentication target person 10.

Further, similarly to the first to fourth example embodiments, the authentication system 1 of the fifth example embodiment determines the imaging start timing of the imaging device 13 in consideration of the moving speed of the authentication target person 10, and controls the imaging operation of the imaging device 13. Therefore, in the authentication system 1 of the fifth example embodiment, similarly to the first to fourth example embodiments, the authentication target person 10 can be imaged at an appropriate timing according to the movement state of the authentication target person 10.

Therefore, the authentication system 1 of the fifth example embodiment can also image the authentication target person 10 at an appropriate timing according to the movement state of the authentication target person 10, and acquire a clear image in which the blurring of the authentication target person 10 is suppressed, so that the accuracy of the authentication result can be improved.

Note that the road surface 31 of the moving sidewalk 41 may be a horizontal surface, may be an inclined surface ascending toward the imaging device 13, or may be an inclined surface descending toward the imaging device 13 as illustrated in Fig. 9. In a case where the road surface 31 is an inclined surface, as compared with a case where the road surface 31 is a horizontal surface, the visual line of the authentication target person 10 is easily determined such that the authentication target person 10 looks at the vicinity of the feet, and thus, the configuration in which the road surface 31 is an inclined surface can obtain an effect of easily imaging the eye area (iris) of the authentication target person 10. In addition, in the configuration in which the road surface 31 is an inclined surface descending, in a case where a plurality of authentication target persons 10 are arranged in a direction toward the imaging device 13, a height difference is likely to occur such that the head of the authentication target person 10 behind the authentication target person 10 arranged in the front-rear direction is higher than the head of the authentication target person 10 ahead of the authentication target person 10. Therefore, it is possible to reduce the occurrence of a situation in which a part or the whole of the face of the authentication target person 10 on the rear side is hidden by the head of the authentication target person 10 on the front side and the image cannot be favorably captured by the imaging device 13.

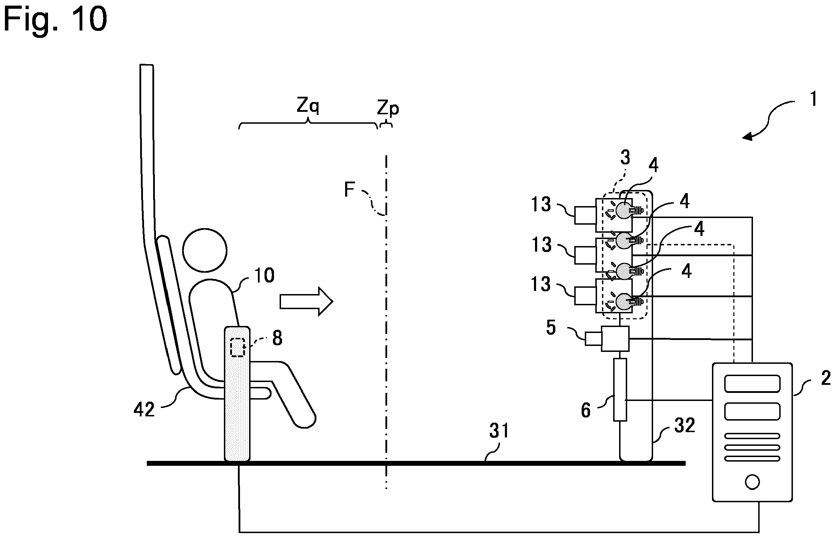

Note that, in the fifth example embodiment, an example in which the moving sidewalk 41 is provided as the shake suppression device 11 has been described. However, for example, a transportation device that carries the authentication target person 10 in a seated state, such as a chair lift 42 or an automatic driving cart as illustrated in Fig. 10, may be provided at least in the imaging preparation area Zq and the imaging area Zp as the shake suppression device 11. In this case, since the authentication target person 10 passes through the imaging area Zp in a seated state, the body shaking of the authentication target person 10 in the imaging area Zp can be suppressed as compared with the case where the moving sidewalk 41 is provided. As a result, the authentication system 1 can obtain an effect that the ROI in the captured image can be narrowed. Furthermore, the authentication system 1 cooperates with a drive system that controls the operation of transportation device such as the chair lift 42 and the automatic driving cart, and for example, controls the orientation of the chair lift 42, the automatic driving cart, and the like, so that the face of the authentication target person 10 can be directed toward the imaging device 13.

Even in a case where transportation device such as the chair lift 42 and the automatic driving cart as described above is provided, similarly to the above, the authentication system 1 of the fifth example embodiment is connected to the drive system that controls the operation of the transportation device, and acquires information regarding the moving speed in the transportation device. Then, the detection unit 24 detects the moving speed of the authentication target person 10 based on the acquired information on the moving speed. The imaging control unit 23 determines the imaging start timing of the imaging device 13 using the moving speed of the authentication target person 10, and further controls the imaging operation of the imaging device 13.

In the above example, the authentication system 1 acquires information on the moving speed of the transportation device from the driving system that drives the transportation device such as the moving sidewalk 41, the chair lift 42, and the automatic driving cart, and the detection unit 24 detects the moving speed of the authentication target person 10 based on the acquired information. Alternatively, the detection unit 24 may detect (calculate) the moving speed of the authentication target person 10 by the following configuration. For example, a mark is attached to the moving sidewalk 41, the chair lift 42, or the automatic driving cart, and a camera (for example, the camera 38 illustrated by a dotted line in Fig. 6) that images such a mark at least in the imaging preparation area Zq is provided. Then, the detection unit 24 detects the position of the mark in the image captured by the camera 38 using a detection model for mark detection stored in advance in the storage device 30. The detection model for mark detection is a model for detecting a mark from a captured image, which is generated by learning an image of the mark, and is generated in advance and stored in the storage device 30.

Furthermore, the detection unit 24 calculates the moving speed of the mark as the moving speed of the authentication target person 10 based on the moving distance of the mark in the plurality of time-series images (frame images) captured by the camera 38 and the moving time based on the frame rate. In this manner, the detection unit 24 may calculate the moving speed of the authentication target person 10.

Furthermore, the detection unit 24 may calculate the moving speed of the authentication target person 10 by the following configuration. For example, a transmitter that emits a beacon signal may be attached to a chair of the chair lift 42 or an automatic driving cart, and a plurality of reception sensors that receives the beacon signal may be arranged at intervals in the imaging preparation area Zq along a passage toward an entrance of the entrance monitoring area. As described above, the detection unit 24 receives the information indicating the installation position of the reception sensor that has received the beacon signal via the acquisition unit 21, thereby detecting the position of the authentication target person 10 based on the information and calculating the moving speed of the authentication target person 10.

### <Other example embodiments>

The form of the authentication system 1 of the present disclosure is not limited to the first to fifth example embodiments, and various other forms can be adopted. For example, as still another example of the shake suppression device 11, a configuration in which a low-rebound mat is laid at least in a passage portion of the imaging preparation area Zq and the imaging area Zp may be adopted. The low-rebound mat is a mat formed of, for example, a material called low-rebound urethane having small rebound resilience and high impact absorbability, and can suppress the body shaking of the authentication target person 10 due to walking. When the low-rebound mat is laid on the passage, the plurality of pressure-sensitive sensors 9 as described in the second example embodiment may be arranged at intervals on the low-rebound mat along the moving and walking of the authentication target person 10. Such a pressure-sensitive sensor 9 can detect the position of the authentication target person 10 in the same manner as described above. Furthermore, when the low-rebound mat is laid on the passage, the handrail 7 described in the first example embodiment and the like may be omitted. In addition, both the low-rebound mat and the handrail 7 may be provided as the shake suppression device 11.

Furthermore, in the second example embodiment, an example in which the whole camera 5 is configured by a stereo camera has been described, but for example, a stereo camera may be provided in parallel with the whole camera 5 separately from the whole camera 5. In such a case, the stereo camera is installed so that, for example, the mark attached to the chair of the chair lift or the automatic driving cart as described above is imaged. Then, the detection unit 24 may calculate the moving speed of the mark as the moving speed of the authentication target person 10 using the position information of the mark obtained from the plurality of time-series images captured by the stereo camera.

Furthermore, as described in the fourth example embodiment and the like, when a mark is attached to the handrail 7, the road surface 31, the chair of the chair lift, or the automatic driving cart in order to detect the position of the authentication target person 10, the mark may be made of a material that easily reflects light. Furthermore, the mark may be made of a material that reacts to light having a predetermined wavelength. In such a case, a light source that irradiates the mark with light may be further provided. With such a configuration, for example, the mark can be made conspicuous in the captured image obtained by imaging the mark, and the mark can be easily detected.

Furthermore, in the first to fifth example embodiments, the authentication system 1 has been described as a system used for determination of whether to permit entrance into the entrance monitoring area, but the authentication system 1 of the present disclosure is also applicable to authentication other than determination of whether to permit entrance.

The present invention has been described above using the above-described example embodiments as exemplary examples. However, the present invention is not limited to the above-described example embodiments. That is, the present invention can apply various aspects that can be understood by those of ordinary skill in the art within the scope of the present invention.

This application is based upon and claims the benefit of priority from Japanese patent application No. 2020-174914, filed on October 16, 2020, the disclosure of which is incorporated herein in its entirety by reference.

### Reference Signs List

- 1: authentication system
- 11: shake suppression device
- 12: detection device
- 13: imaging device
- 14: control device
- 15: authentication device

## Claims

1. An authentication system comprising:
a shake suppression means configured to suppress shaking of a body of an authentication target person;
a detection means configured to detect a position of the authentication target person;
an imaging means configured to image the authentication target person;
a control means configured to control an imaging operation of the imaging means that images the authentication target person, based on a detection result from the detection means; and
an authentication means configured to determine whether to authenticate the authentication target person based on biometric information acquired from a captured image of the authentication target person captured by the imaging means.

2. The authentication system according to claim 1, wherein
the control means controls the imaging operation based on information on movement of the position of the authentication target person detected by the detection means and information on a preset imaging point where the imaging means images the authentication target person.

3. The authentication system according to claim 2, wherein
the information on the movement of the position of the authentication target person is a moving speed of the authentication target person, and
the control means estimates a time for reaching the imaging point based on the moving speed of the authentication target person, and determines an imaging start timing of the imaging means based on the estimated time.

4. The authentication system according to any one of claims 1 to 3, wherein the shake suppression means includes a handrail that assists movement of the authentication target person in an area where the authentication target person is imaged by the imaging means.

5. The authentication system according to claim 4, wherein
the detection means includes a plurality of pressure-sensitive sensors arranged on the handrail along a moving direction of the authentication target person, and detects the position of the authentication target person using a sensor output that is output from the pressure-sensitive sensors.

6. The authentication system according to any one of claims 1 to 5, wherein
the imaging means images an iris of the authentication target person, and
the authentication means determines whether to authenticate the authentication target person based on the iris that is biometric information acquired from the captured image of the authentication target person captured by the imaging means.

7. An authentication method for causing a computer to execute:
detecting a position of an authentication target person whose body shaking is suppressed by a shake suppression means that suppresses the body shaking of the authentication target person;
controlling an imaging operation of an imaging means that images the authentication target person, based on a detection result; and
determining whether to authenticate the authentication target person based on biometric information acquired from a captured image of the authentication target person captured by the imaging means.

8. A program storage medium storing a computer program for causing a computer to execute:
a process of detecting a position of an authentication target person whose body shaking is suppressed by a shake suppression means that suppresses the body shaking of the authentication target person;
a process of controlling an imaging operation of an imaging means that images the authentication target person, based on a detection result; and
a process of determining whether to authenticate the authentication target person based on biometric information acquired from a captured image of the authentication target person captured by the imaging means.
